# EUROPÄISCHE PATENTSCHRIFT

(11) **EP 1 225 139 B1**
(45) Veröffentlichungstag und Bekanntmachung des Hinweises auf die Patenterteilung: **01.02.2006**
(21) Anmeldenummer: 02450009.2
(22) Anmeldetag: 18.01.2002
(51) Int. Cl.: B65G 47/252, B65G 47/90

(54) **Wendevorrichtung**
Turning device
Dispositif de retournement

(30) Priorität: 19.01.2001 AT 982001
(43) Veröffentlichungstag der Anmeldung: 24.07.2002
(73) Patentinhaber: Springer Maschinenfabrik AG, 9360 Friesach (AT)
(72) Erfinder: Gruber, Peter, 9360 Friesach (AT)
(74) Vertreter: Gibler, Ferdinand

(56) Entgegenhaltungen:
- FR-A- 1 447 434
- US-A- 3 895 722
- US-A- 4 573 863

## Beschreibung

Die Erfindung betrifft eine Vorrichtung zum Wenden von länglichem Stückgut (3), insbesondere von Holzbrettern, Balken und dergleichen, mit einer Wendeeinheit (1) und einer Transportvorrichtung (2), wobei das Stückgut (3) auf der Transportvorrichtung (2) im Quertransport, insbesondere auf einem Förderband oder auf einer Förderkette, an der Wendeeinheit (1) vorbeibewegbar und von der Wendeeinheit um die Längsachse des Stückgutes wendbar ist.

Solche Vorrichtungen werden bei der Oberflächenprüfung eines flachen Stückgutes verwendet, wobei die jeweils obenliegende Oberfläche vor und nach dem Wenden geprüft werden kann. Die Oberflächenprüfung kann z.B. visuell durch einen Bedienungsmann oder mittels einer elektronischen Scanvorrichtung durchgeführt werden. Weiters werden solche Vorrichtungen eingesetzt, um nach dem Wenden die zuerst der Transportvorrichtung zugewandte Seite des Stückgutes bearbeiten zu können.

Bekannte Vorrichtungen umfassen eine Aushebeeinrichtung, welche in eine Transportvorrichtung im Quertransport eingebaut ist, welche mit über die Stückgutlänge verteilten Armen das Stückgut anhebt, das Stückgut wendet und wieder ablegt. Nachteilig bei dieser Vorrichtung ist, daß die winkelige Ausrichtung des Stückgutes auf der Transportvorrichtung exakt eingehalten werden muß, wodurch ein konstruktiver Aufwand für die Transportvorrichtung, z.B. Mitnehmer, erforderlich ist. Ein weiterer Nachteil der bekannten Vorrichtungen ist, daß konstruktionsbedingt die beiden Seiten des Stückgutes nicht unmittelbar aufeinanderfolgend von einem Prüfer geprüft werden können. Weiters ist es nachteilig, daß ein selektives Wenden einzelner Stückgüter nicht möglich ist.

Aus der US 4 573 863 A ist eine Wendevorrichtung für den Einsatz bei einem Rollenförderer bekannt, wobei Greifarme oberhalb und unterhalb der Transportebene im offenen Zustand der Wendevorrichtung angeordnet sind. Wird ein zu wendendes Stückgut im Bereich der Wendevorrichtung detektiert, so wird das Stückgut angehalten, werden die Greifarme in Richtung des Stückgutes bewegt, wird dieses vollflächig erfaßt, werden die Greifarme mit dem Stückgut aus der Transportebene um eine Schwenkachse, die parallel zur Transportrichtung ist, geschwenkt, um eine Drehachse gewendet und anschließend wieder um die Schwenkachse in die Transportebene geschwenkt. Soll das Stückgut nicht gewendet werden, so kann es an der Wendevorrichtung vorbei bewegt werden. Nachteilig dabei ist, daß die Transportvorrichtung während des Wendevorgangs still steht, von der Wendevorrichtung hohe Kräfte aufgenommen werden können müssen und sich die Wendevorrichtung nicht für längliches Stückgut eignet.

Die FR 1 447 434 A offenbart eine Hebevorrichtung für Säcke od. dgl.. Nachteilig an einer Hebevorrichtung gemäß der FR 1 447 434 A ist, daß sie sich nicht zum Wenden von auf einer Transportvorrichtung bewegten Stückgüter eignet.

Demgemäß ist es Aufgabe der Erfindung eine Vorrichtung zum Wenden beizustellen, die die Nachteile der bekannten Vorrichtungen vermeidet.

Dies wird erfindungsgemäß dadurch gelöst, daß die Wendeeinheit (1) ein Drehelement (5) zum stimseitigen Erfassen des Stückgutes (3) umfaßt und das Drekelement in Transportrichtung bewegbar ist , wobei die Wendeeinheit (1) dazu vorgesehen ist, das Stückgut (3) während des Wendevorgangs auf der Transportvorrichtung (2) abzuwälzen.

Die erfindungsgemäße Vorrichtung hat den Vorteil, daß sie nur einen kleinen Bereich des Stückgutes verdeckt und das gleichzeitige optische Erfassen von Stückgütern vor und nach dem Wenden ermöglicht.

In einer Weiterführung der Erfindung kann das Drehelement zumindest teilweise seitlich der Transportvorrichtung angeordnet sein. Dadurch wird eine einfache Wartbarkeit sichergestellt und ein Einbau in bestehende Transportvorrichtungen ermöglicht.

In weiterer Ausgestaltung der Erfindung kann vorgesehen sein, daß das Drehelement über eine Welle mit einem Antriebsaggregat, insbesondere einem Motor, verbunden ist, wodurch die Abmessungen der Vorrichtung gering gehalten werden können.

Weiters kann in Weiterbildung der Erfindung vorgesehen sein, daß das Drehelement zum stimseitigen Erfassen eine randoffene Ausnehmung aufweist. Dies stellt eine besonders einfache Konstruktion für ein Stückgut mit konstanter Höhe dar.

Um das Stückgut besser erfassen zu können, kann in Weiterführung der Erfindung das Drehelement zum stimseitigen Erfassen eine Klemmvorrichtung umfassen.

Um einen größeren Einsatzbereich der Vorrichtung zu erreichen, kann gemäß einer weiteren Ausführungsform der Erfindung vorgesehen sein, daß die Klemmvorrichtung zumindest einen beweglichen Backen aufweist.

In weiterer Ausgestaltung der Erfindung kann der zumindest eine bewegliche Backen drehbar gelagert sein, um ein schnelles Öffnen und Schließen zu gewährleisten.

Gemäß einer Weiterführung der Erfindung kann vorgesehen sein, daß zur Betätigung der Klemmvorrichtung eine Schiebemuffe, welche konzentrisch zur Welle angeordnet ist, vorgesehen ist. Dadurch ergibt sich eine kompakte und symmetrische Bauweise.

Für die Automatisation des Klemmvorgangs hat es sich gemäß einer Ausführungsvariante der Erfindung als besonders günstig erwiesen, daß ein Stellglied für die Betätigung der Klemmvorrichtung vorgesehen ist. Dies kann insbesondere ein Zylinder-Kolben-System oder ein Spindelsystem sein.

In diesem Zusammenhang kann in Weiterbildung der Erfindung vorgesehen sein, daß ein Element zur Erfassung der Lage des Stückgutes auf der Transportvorrichtung vorgesehen ist, um den optimalen Zeitpunkt für den Wendevorgang bestimmen zu können.

Für einen Einsatz an verschiedenen Transportvorrichtungen kann gemäß einer weiteren Ausführungsform der Erfindung die Wendeeinheit höhenverstellbar angeordnet sein.

In weiterer Ausgestaltung der Erfindung kann das Drehelement in der Höhe, vorzugsweise in einem Bereich, der zumindest die Hälfte der größten Abmessung des Querschnitts des Stückgutes beträgt, frei bewegbar sein. Dadurch kann das Drehelement eine erzwungene Translation des Stückgutes bezüglich der Höhe mitvollziehen.

In diesem Zusammenhang kann das Drehelement gemäß einer Ausführungsvariante der Erfindung um eine Achse parallel zur Transportrichtung des Stückgutes drehbar gelagert sein, wodurch sich eine besonders einfache Konstruktion ergibt.

Eine einfache konstruktive Ausgestaltung für die Bewegbarkeit in Transportrichtung ergibt sich, wenn gemäß einer anderen Ausführungsform der Erfindung das Drehelement um eine Achse im wesentlichen normal sowohl zur Transportrichtung als auch zur Längsachse des Stückgutes schwenkbar gelagert ist.

Um die Bewegung in Transportrichtung steuern zu können, kann in weiterer Ausgestaltung der Erfindung ein Stellelement für die Bewegung des Drehelements in Transportrichtung vorgesehen sein. Dies kann insbesondere ein Zylinder-Kolben-System oder ein Spindelsystem sein.

Um die Lage des Drehelements einstellen zu können, kann gemäß einer weiteren Ausführungsform der Erfindung das Drehelement in Richtung der Drehachse beweglich sein.

In Weiterbildung der Erfindung kann vorgesehen sein, daß die Transportvorrichtung im Bereich der Wendeeinheit wenigstens eine zusätzliche Auflagevorrichtung, insbesondere eine zusätzliche Transportvorrichtung, aufweist. Dadurch kann die Oberflächenpressung der Stückgüter, vor allem während sie auf der Schmalseite aufstehen, verringert und eine Beschädigung der Stückgüter verhindert werden.

Gemäß einer Weiterbildung der Erfindung kann eine Einrichtung zur Erfassung des Drehwinkels des Drehelements, insbesondere eine auf der Welle fixierte Schaltnocke, vorgesehen sein. Dadurch läßt sich die genaue Position des Drehelements bestimmen und durch die Steuerung des Antriebsaggregats die Sollposition einhalten.

In weiterer Ausgestaltung der Erfindung kann vorgesehen sein, daß wenigstens zwei Wendeeinheiten in Transportrichtung der Transportvorrichtung nebeneinander angeordnet sind, um durch das parallele Wenden den Durchsatz erhöhen zu können.

Weiters betrifft die Erfindung ein Verfahren zum Wenden von länglichem Stückgut, insbesondere von Holzbrettern, Balken und dergleichen, wobei das Stückgut auf einer Transportvorrichtung im Quertransport, insbesondere auf einem Förderband oder auf einer Förderkette, bewegt und in einem Wendebereich um seine Längsachse gewendet wird, wodurch die der Transportvorrichtung abgewandte Seite dieser zugewendet wird.

Es ist Aufgabe der vorliegenden Erfindung, ein Verfahren beizustellen, sodaß das Stückgut auf der Transportvorrichtung nicht exakt ausgerichtet sein muß, für jedes Stückgut individuell entschieden werden kann, ob es gewendet werden soll und die beiden Seiten des Stückgutes unmittelbar aufeinanderfolgend von einem Prüfer geprüft werden können.

Erfindungsgemäß wird dies dadurch erreicht, daß mindestens eine Stirnseite (30) des länglichen Stückgutes (3) von einem Drehelement (5) erfaßt, durch Aufbringung eines Drehmomentes um seine Längsachse gewendet wird und das Drehelement (5) während des Wendens in Richtung der Transportvorrichtung (2) mitbewegt wird, wobei das Stückgut (3) auf der Transportvorrichtung abgewälzt wird, und nachfolgend das Stückgut (3) mittels der Transportvorrichtung (2) aus dem Wendebereich entfernt wird.

Aufgrund des erfindungsgemäßen Verfahrens ergibt sich der Vorteil, daß das Stückgut selektiv gewendet werden kann, weshalb sich das Verfahren besonders gut für den Einsatz in elektronischen Anlagen eignet.

In einer weiteren Ausbildung der Erfindung kann das Stückgut vom Drehelement geklemmt werden. Dadurch wird ein sichereres Erfassen des Stückgutes erzielt.

Um einen besonders einfachen Wendevorgang zu erreichen, kann gemäß einer anderen Ausführungsform der Erfindung das Stückgut beim Wenden auf der Transportvorrichtung abgewälzt werden, wobei die Höhe des Drehelements frei bewegbar ist, um die erforderliche Höhenänderung auszuführen.

Gemäß einer Weiterführung der Erfindung kann vorgesehen sein, daß der Drehwinkel des Drehelements erfaßt und zur Steuerung des Antriebsaggregats verwendet wird, wodurch die Einhaltung einer Sollpositon des Drehelements gewährleistet werden kann.

In weiterer Ausgestaltung der Erfindung kann vorgesehen sein, daß das Drehelement während des Wendens mit ungleichförmiger Winkelgeschwindigkeit um seine Drehachse gedreht wird. Diese Maßnahme ermöglicht es die horizontale Massenmittelpunktsbewegung des Stückgutes konstant zu halten.

In weiterer Ausgestaltung der Erfindung kann vor dem Wenden die Lage des Stückgutes bezüglich der Transportvorrichtung bestimmt werden, wodurch der optimale Zeitpunkt für das Wenden ermittelt werden kann.

Um eine unterschiedliche Anordnung des Stückgutes in seiner Längsrichtung auf der Transportvorrichtung ausgleichen zu können, kann gemäß einer anderen Ausführungsform der Erfindung das Drehelement an die Lage des Stückgutes angepaßt werden und dazu in Längsrichtung des Stückgutes bewegt werden.

Gemäß einer alternativen Ausführungsform der Erfindung kann die Oberflächenpressung des Stückgutes durch wenigstens eine zusätzliche Auflagevorrichtung, insbesondere einer zusätzlichen Transportvorrichtung, im Wendebereich verringert werden, um Beschädigungen des Stückgutes zu vermeiden.

Ist der Abstand zwischen den Stückgütern sehr gering oder soll die Geschwindigkeit im Wendebereich von der der Transportvorrichtung abweichen, kann gemäß einer Weiterführung der Erfindung die Geschwindigkeit des Stückgutes im Wendebereich durch eine zusätzliche Transportvorrichtung verändert werden.

Ist ein hoher Durchsatz und eine genaue Ausrichtung des Stückgutes erforderlich, kann in einer alternativen Ausführungsform der Erfindung die Geschwindigkeit des Stückgutes vor dem Wendebereich durch eine zusätzliche Transportvorrichtung beschleunigt werden und nachfolgend im Wendebereich eine weitere Transportvorrichtung mit Mitnehmern verwendet werden.

In Weiterbildung der Erfindung kann vorgesehen sein, daß mindestens zwei Stückgutteile parallel gewendet werden. Daraus ergibt sich der Vorteil, daß auch bei einem hohen Durchsatz genügend Zeit für den Wendevorgang sichergestellt wird.

Die Erfindung wird unter Bezugnahme auf die beigeschlossenen Zeichnungen, in welchen eine Ausführungsform dargestellt ist, näher beschrieben. Dabei zeigt:
Fig. 1 eine Ansicht von vorne auf eine Ausführungsform der erfindungsgemäßen Vorrichtung;
Fig.2 eine Draufsicht auf die erfindungsgemäße Vorrichtung, die in Fig. 1 dargestellt ist, während des Wendevorgangs;
Fig.3 eine Seitenansicht auf die erfindungsgemäße Vorrichtung gemäß Fig. 1 während des Wendevorgangs;
Fig.4 eine Seitenansicht auf eine andere Ausführungsform der Erfindung;
Fig.5 eine Seitenansicht auf das Drehelement der Ausführungsform gemäß Fig. 4, wobei die Backen geöffnet sind;
Fig.6 eine Seitenansicht auf das Drehelement von Fig. 5, wobei die Backen geschlossen sind.
Fig.7 eine Seitenansicht auf das Drehelement einer anderen erfindungsgemäßen Vorrichtung, wobei die Backen unbeweglich sind.
Fig.8 eine Draufsicht auf eine weitere Ausführungsform der Erfindung, bei der zwei Wendeeinheiten auf einem Ständer nebeneinander montiert sind.

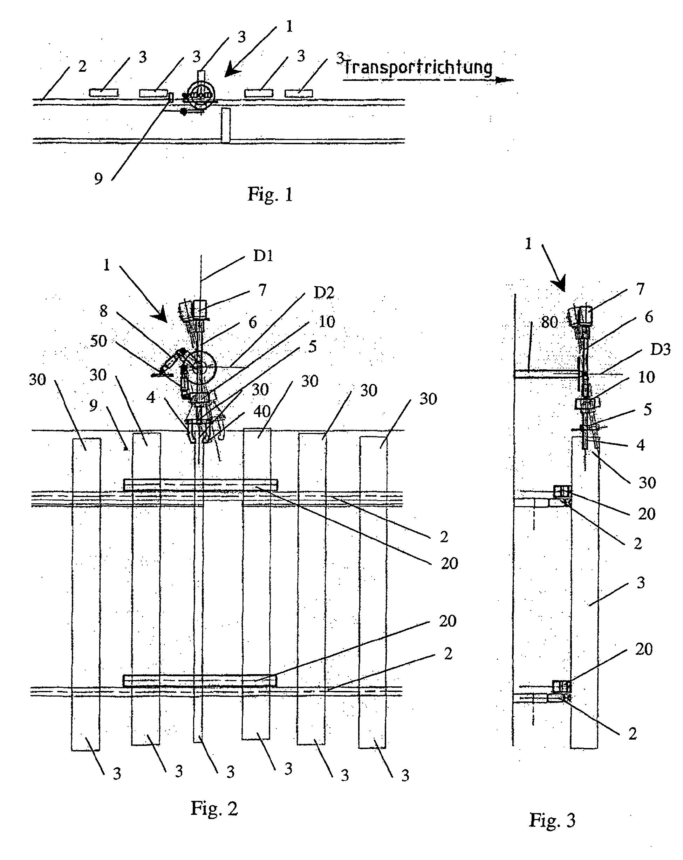

In den Figuren 1 bis 3 ist eine erfindungsgemäße Vorrichtung zum Wenden dargestellt. Diese ist seitlich einer Transportvorrichtung 2 angeordnet, auf der Holzbretter 3 im Quertransport transportiert werden können, wobei die Holzbretter 3 in einer horizontalen Ebene transportiert werden. Es können auch andere Formen von Stückgütern, wie z.B. Balken, Regalböden oder dergleichen, von der Transportvorrichtung 2 transportiert werden. Beim Transport gelangt ein Holzbrett 3 in den Bereich einer Wendeeinheit 1, die ein Drehelement 5 zum stimseitigen Erfassen des Holzbretts 3 umfaßt, welches das Holzbrett 3 im Bereich einer seiner Stirnseiten 30 erfaßt und wendet. Das Drehelement umfaßt eine Klemmvorrichtung 10 mit beweglichen Backen 4 und 40. Das Drehelement 5 weist in Verbindung mit den Backen 4 und 40 eine randoffene Ausnehmung für die Aufnahme der Stirnseite 30 des Holzbretts 3 auf.

Ist die Höhe des Stückgutes 3, das gewendet werden soll, im Bereich der Stirnseite 30 für alle Stückgüter 3 konstant, so brauchen die Backen 4 und 40 der randoffenen Ausnehmung nicht beweglich zu sein. Für diesen Fall sieht eine Ausführungsform eine einstückige randoffene Ausnehmung vor. Eine weitere mögliche Ausführungsform sieht nur einen beweglichen Backen 4, 40 vor.

Für den Vorgang des Wendens ist das Drehelement 5 zunächst so positioniert, daß einer der Backen 4, 40 zum Boden und der andere nach oben weist. Die Backen 4 und 40 sind gelenkig im Drehelement 5 gelagert und so weit geöffnet, daß die Stirnseite 30 des Holzbretts 3 ungehindert in den Bereich zwischen den Backen 4 und 40 gelangen kann. Sobald sich die Stirnseite 30 im Bereich der Backen 4 und 40 befindet, werden die Backen 4, 40 durch ein Stellglied 50 geschlossen und so die Stirnseite 30 des Holzbretts 3 erfaßt. Von einem Motor 7 wird über eine Welle 6 ein Drehmoment auf das Drehelement 5 aufgebracht, wodurch sich das Drehelement 5 um eine Drehachse D1 dreht. In anderen Ausführungsformen sind als Antriebsaggregat 7 eine Kurbel, ein Getriebe, das mit der Transportvorrichtung 2 verbunden ist, und dergleichen vorgesehen. Um den optimalen Zeitpunkt für diesen Vorgang bestimmen zu können, ist ein Element 9 zur Erfassung der Lage des Stückgutes 3 auf der Transportvorrichtung 2 vorgesehen, z.B. ein optischer Sensor oder eine Lichtschranke. Die Signale des Lageerfassungselements 9 werden in Steuerungsbefehle an die Wendeeinheit 1 umgewandelt.

Über die Backen 4 und 40 wird das Drehmoment vom Drehelement 5 auf das Holzbrett 3 übertragen, wodurch es zu kippen beginnt und sich so aufstellt, daß es mit seiner Schmalseite auf der Transportvorrichtung 2 zu stehen kommt. In weiterer Folge kippt das Holzbrett 3 weiter, sodaß es auf der Seite zu liegen kommt, die vorher der Transportvorrichtung 2 abgewandt war, das Holzbrett 3 wurde daher durch die Wendeeinheit 1 gewendet. Dabei wird das Holzbrett 3 durch den minimalen Bewegungsaufwand zum Wenden gewendet. Beide Seiten können unmittelbar aufeinanderfolgend von einem Prüfer betrachtet werden, da dieWendeeinheit 1 nur den Stirnbereich 30 des Holzbretts 3 und nur in einem kleinen Bereich der Transportvorrichtung 2 verdeckt.

Durch dieses Verfahren wird der Aufwand für das Wenden minimiert, weshalb ein Wenden ohne große Zeitverzögerung möglich ist. Weiters wird die Transportvorrichtung 2 als Auflagefläche genutzt, wodurch die Wendeeinheit 1 ohne aufwendige Bretthalterung auskommt.

Zur Übertragung des Drehmomentes ist es nicht wichtig, daß das Holzbrett 3 von den Backen 4 und 40 geklemmt wird und es ist in einer anderen Ausführungsform der Erfindung ein Drehelement 5 mit festen Backen 4, 40 vorgesehen. Ist zumindest ein Backen 4, 40 beweglich, kann das Drehelement 5 für Stückgüter 3 mit unterschiedlicher Höhe eingesetzt werden. Es hat sich als günstig erwiesen, daß die Backen 4 und 40 beweglich sind und das Stellglied 50 so wirkt, daß die von den Backen 4, 40 gebildete randoffene Ausnehmung symmetrisch bezüglich der Drehachse D1 des Drehelements ist. Der Vorteil einer gelenkigen Führung gegenüber einer translatorischen Verschiebung der Backen 4 bzw. 40 ist, daß die Gelenke unempfindlicher gegenüber Verschmutzung sind.

Durch eine nur leichte Klemmung wird gewährleistet, daß sich das Holzbrett 3 gegenüber den Backen 4 und 40 verschieben kann, wodurch es auch möglich ist, Holzbretter 3 zu wenden, die nicht exakt bezüglich der Transportvorrichtung 2 ausgerichtet sind. Durch das Eigengewicht der Holzbretter 3 wird erreicht, daß sie über ihre Schmalseite abgewälzt werden und im wesentlichen nicht auf der Transportvorrichtung 2 verschoben werden. Eine Relativbewegung zwischen Holzbrett 3 und den Backen 4 und 40 wird dadurch hervorgerufen, daß, mit Ausnahme der Seite, über die abgewälzt wird, das Holzbrett 3 bei dem Wendevorgang auch eine Auf- und Abwärtsbewegung durchführt. Um Beschädigungen der Stirnseite 30 des Holzbretts 3 durch die Relativbewegung infolge der Auf- und Abwärtsbewegung des Holzbretts 3 zu verhindern, kann eine freie vertikale Beweglichkeit des Drehelements 5 vorgesehen sein, wodurch die Relativbewegung verhindert wird. Diese Beweglichkeit soll zumindest die Hälfte der größten Abmessung des Querschnitts des Stückgutes 3 betragen. In der gezeigten Ausführungsform wird diese freie vertikale Beweglichkeit beigestellt, indem die Welle 6 um eine Achse D2 frei drehbar gelagert ist. Dies ist in Fig. 3 strichliert dargestellt. In anderen Ausführungsformen ist eine translatorische Bewegung vorgesehen.

Durch die Überlagerung der Drehbewegung des Stückgutes 3 und der Translation der Transportvorrichtung 2 kann es durch die Führung der Wendeeinheit 1 zu einer Verschiebung des Stückgutes 3 auf der Transportvorrichtung 2 kommen. Diese Verschiebung ist in vielen Fällen unerwünscht, da dadurch Beschädigungen der Kanten und Oberflächen des Stückgutes 3 auftreten können. Um die Verschiebung gering zu halten kann vorgesehen sein, daß das Stückgut 3 gegen die Transportvorrichtung 2 gedreht wird, da dann die Richtungen der Rotation des Stückgutes 3 und der Translation der Transportvorrichtung 2 entgegengesetzt sind und sich gegenseitig aufheben. Ungünstig ist, daß in diesem Fall der Abstand zwischen den Stückgütern 3 mindestens so groß wie die Breite und die Höhe des Querschnitts des Stückgutes 3 sein muß, da das Stückgut 3 beim Wenden in diesen Zwischenraum gelangt. Das Drehelement 5 ist in Transportrichtung bewegbar.

Dadurch kann die Translation der Transportvorrichtung 2 und die Horizontalkomponente der Rotation des Stückgutes 3 von der Wendeeinheit 1 mitvollzogen werden. Diese Bewegbarkeit erlaubt es, das Stückgut 3 sowohl in als auch gegen die Transportrichtung ohne Verschiebung des Stückgutes 3 auf der Transportvorrichtung 2 zu wenden. Bei der gezeigten Wendeeinheit 1 ist die Bewegbarkeit in Transportrichtung des Drehelements 5 dadurch realisiert, daß das Drehelement 5 um eine Achse D3 schwenkbar gelagert ist. Diese Beweglichkeit ist in Fig. 2 strichliert dargestellt. In anderen Ausführungsformen ist eine translatorische Bewegung vorgesehen. Um die Bewegung in Transportrichtung steuern zu können ist ein Stellelement 8 vorgesehen.

Für ein zyklisches Verfahren muß das Drehelement 5 nach dem Wenden eines Stückgutes 3 aus einer Ausgangsposition wieder in diese Ausgangsposition gebracht werden. Dabei ist eine Bewegung in der Transportebene notwendig. Eine Rückstellung der Rotation des Drehelements 5 ist nicht notwendig, da es für die Funktion der erfindungsgemäßen Wendeeinheit 1 unerheblich ist, ob die Backe 4 oder die Backe 40 dem Boden zugewandt ist. Während dieser Bewegung in die Ausgangsposition darf das nächste Stückgut 3 nur bis in den dortigen Bereich zwischen den Backen 4 und 40 gelangen. Dies begrenzt den Durchsatz und kann erfindungsgemäß verbessert werden, indem mindestens zwei Wendeeinheiten 1 parallel arbeiten. In diesem Fall können Stückgüter 3 während der Bewegung des Drehelements 5 in die Ausgangsstellung durch den Bereich zwischen den Backen 4 und 40 passieren, die dann von den weiteren Wendeeinheiten 1 gewendet werden. Dadurch kann der Ablauf in relativ langsamer Bewegung durchgeführt werden, wobei jedoch die Stückleistungen moderner, leistungsfähiger Anlagen bewältigt werden können.

Da das Stückgut 3 die Wendeeinheit 1 während der Bewegung in die Ausgangsposition und in der Ausgangsposition ungehindert passieren kann, ist es mit der erfindungsgemäßen Wendeeinheit 1 auch möglich nur bestimmte Stückgüter 3 zu wenden. So kann für jedes Stückgut 3 individuell entschieden werden, ob es gewendet werden soll oder nicht. Dies kann durch eine Integration in eine elektronische Anlage vollautomatisch durchgeführt werden.

Für das Aufbringen des Drehmomentes ist es nicht erforderlich, die Lage des Stückgutes 3 im Drehelement 5 exakt festzulegen. Es ist nur notwendig, daß das Drehmoment ohne Beschädigung des Stückgutes 3 von den Backen 4 und 40 übertragen werden kann. Daher sind Abweichungen der Lage des Stückgutes 3 in Querrichtung zulässig. Der Toleranzbereich dieser Abweichungen kann erweitert werden, indem vorgesehen ist, daß das Drehelement 5 in Richtung der Drehachse D1 beweglich ist.

Es kann vorgesehen sein, daß im Bereich der Drehbewegung des Stückgutes zur Schonung der Oberflächen und Kanten des Stückgutes 3 zusätzlich zur Transportvorrichtung 2 Auflagevorrichtungen 20 beliebiger Breite und Oberflächenstruktur Verwendung finden. Diese sind vorzugsweise als zusätzliche Transportvorrichtungen ausgebildet und können insbesondere zur Veränderung der Geschwindigkeit des Stückgutes 3 im Wendebereich verwendet werden. Dabei kann der Abstand zwischen den Stückgütern 3 vergrößert werden, um einen reibungslosen Ablauf und einen schonenden Umgang mit den Stückgütern 3 zu erreichen. Eine weitere Ausführungsform der zusätzlichen Transportvorrichtungen im Wendebereich kann einen großen Abstand zwischen den Stückgütern 3, welcher systembedingt durch die Verwendung von Mitnehmern entsteht, verringern, um die Transportgeschwindigkeit der Stückgüter 3 im Bereich der Wendeeinheit 1 zu verringern. Dies geschieht, indem eine entsprechend langsamere Transportvorrichtung im Bereich der Wendeeinheit 1 vorbeigeführt wird, wodurch die Zeitspanne für den Wendevorgang erhöht wird.

Ein anderes erfindungsgemäßes Verfahren sieht vor, daß das Stückgut 3 vor dem Wendebereich durch eine zusätzliche Transportvorrichtung beschleunigt wird, und durch eine langsame Transportvorrichtung durch den Wendebereich gebracht wird. Auf diese Weise kann sowohl die Geschwindigkeit im Wendebereich verringert, als auch der Abstand zwischen den Stückgütern 3 vergrößert werden.

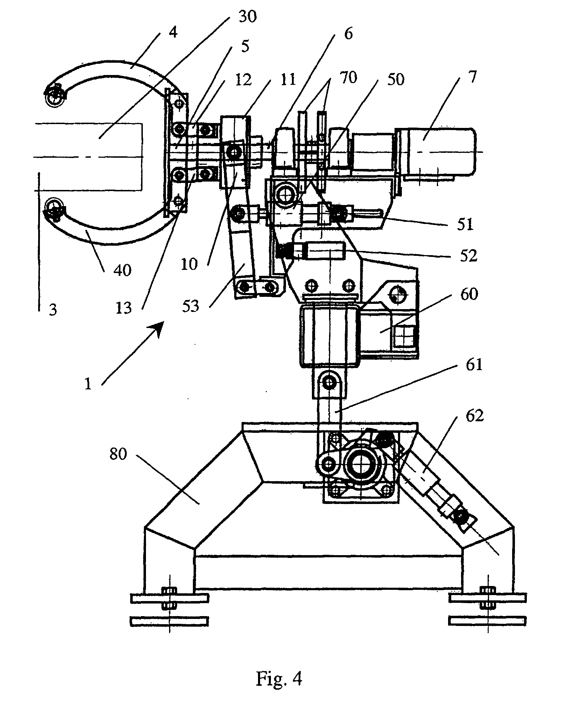

In Fig. 4 ist eine andere Ausführungsform einer erfindungsgemäßen Vorrichtung zum Wenden in Seitenansicht dargestellt. Dabei ist die Wendeeinheit 1 auf einem Rahmen 60 montiert, welcher höhenverstellbar gegenüber einem Ständer 80 ist. Die Vorrichtung zur Höhenverstellung umfaßt eine Verstelleinrichtung 62. Für die Ausfühurng der Verstelleinrichtung eignet sich ein Zylinder-Kolben-System, ein Zahnradgetriebe und dergleichen. Zwischen der Verstelleinrichtung 62 und dem Rahmen 60 ist eine Hubstange 61 vorgesehen. Diese kann als Gewindestange ausgebildet sein und einen Teil der Verstelleinrichtung darstellen. Für die Funktion der Verstelleinrichtung 62 ist es unerheblich, ob sie am Rahmen 60 oder am Ständer 80 befestigt ist. Der Ständer 80 kann am Boden, an der Transportvorrichtung 2 oder an einem anderen Gegenstand befestigt sein. Eine Variante der Erfindung sieht einen Rahmen 60 vor, der so mit dem Ständer 80 verbunden ist, daß er nicht höhenverstellbar ist.

Die Wendeeinheit 1 umfaßt das Drehelement 5 mit zwei beweglichen Backen 4 und 40. In der gezeichneten Lage sind die Backen 4, 40 geöffnet und die Stirnseite 30 eines Holzbretts 3 befindet sich im Bereich zwischen den Backen 4, 40. Die Backen 4, 40 sind im Drehelement 5 gelenkig gelagert und können von der Klemmvorrichtung 10 geöffnet und geschlossen werden. Die Klemmvorrichtung 10 besteht aus einer Schiebemuffe 11, die konzentrisch um die Welle 6 auf der der Stirnseite 30 abgewandten Seite des Drehelements 5 angeordnet ist. Die Schiebemuffe 11 besteht aus einem inneren und einem äußeren Ring, zwischen denen sich ein Lager, insbesondere ein Wälzlager, befindet. Das Lager ist so ausgebildet, daß Axialkräfte, aber keine Umfangskräfte zwischen den Ringen übertragbar sind, sie sich daher gegeneinander verdrehen, aber nicht axial verschieben können. Der innere Ring ist über Verbindungselemente 12, 13 mit den Backen 4, 40 verbunden, sodaß er Rotationen des Drehelements 5 mitvollzieht. Der äußere Ring der Schiebemuffe 11 wird durch das Stellglied 50 betätigt und ist mit diesem verbunden, sodaß er die Rotationen des Drehelements 5 nicht mitvollzieht. Das Stellglied 50 besteht aus einem Zylinder-Kolben-System 51, einem Stoßdämpfer 52 und einem Klemmgestänge 53. In anderen Ausführungsformen kann anstelle des Zylinder-Kolben-Systems 51 ein anderer Betätigungsmechanismus, z.B. eine Gewindestange oder dergleichen, vorgesehen sein. Der Stoßdämpfer 52 stabilisiert die Bewegung der Backen 4, 40 und verhindert, daß die Backen 4, 40 beim Öffnen die Stirnseite 30 des Holzbretts 3 beschädigen können.

Das Drehelement 5 ist über die Welle 6 mit dem Antriebsaggregat 7 verbunden. Das Antriebsaggregat ist in dem gezeigten Ausführungsbeispiel der Motor 7. Weiters sind auf der Welle 6 Schaltnocken 70 vorgesehen, mit denen der Drehwinkel des Drehelements 5 bestimmt werden kann. Diese Information kann für die Steuerung des Motors 7 verwendet werden, um die Bewegung des Drehelements 5 einer vorgegebenen Sollbewegung nachzuführen. Es ist auch möglich eine Rotation des Drehelements 5 mit ungleichförmiger Winkelgeschwindigkeit während des Wendevorgangs auszuführen, insbesondere um eine gleichförmige horizontale Massenmittelpunktsbewegung des Holzbretts 3 zu erreichen.

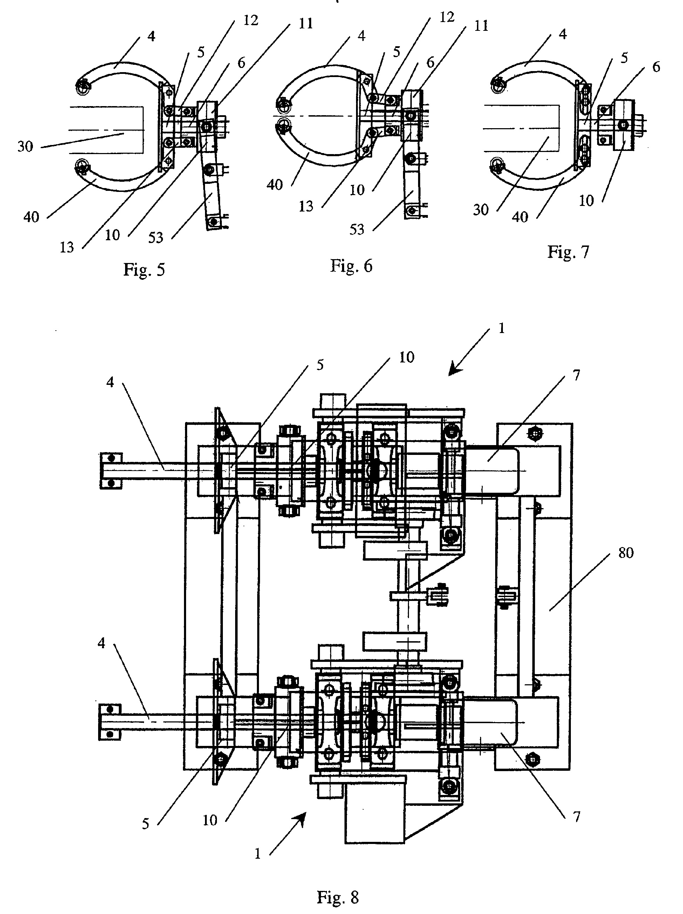

In den Fig. 5 und 6 ist das Drehelement 5 mit den Backen 4, 40 und die Klemmvorrichtung 10 dargestellt. Dabei sind die Backen 4, 40 in Fig. 5 geöffnet und in Fig. 6 geschlossen. Es ist ersichtlich, wie die Backen 4, 40 durch eine axiale Verschiebung der Schiebemuffe 11 durch das Klemmgestänge 53 des Stellgliedes 50 betätigt wird.

In Fig. 7 ist eine alternative Ausführungsform der Erfindung mit unbeweglichen Backen 4, 40 gezeigt. Diese Ausfühurngsform kann z.B. bei einem Defekt der Klemmvorrichtung 10 oder einem Ausfall des Stellgliedes 50 gewählt werden, um die Wendeeinheit bis zu einer allfälligen Reparatur weiterverwenden zu können. In Weiterfühurng der Erfindung können die Backen 4, 40 auch einstückig mit dem Drehelement 5 verbunden sein, wodurch sich eine besonders einfache Konstruktion der erfindungsgemäßen Wendeeinheit 1 ergibt. Um eine große Flexibilität beim Erfassen der Stirnseite 30 des Stückgutes 3 zu erreichen, ist in einer weiteren Ausführungsform der Erfindung vorgesehen, daß für jeden der Backen 4, 40 ein eigenes Stellglied 50 ausgebildet ist.

Die Anzahl der Backen 4, 40 einer erfindungsgemäßen Wendeeinheit ist nicht auf zwei beschränkt und der Winkel, um den das Stückgut 3 gewendet wird, kann von 180 Grad abweichen. So kann es bei einem Balken mit angenähert rechteckigem, insbesondere quadratischem, Querschnitt erforderlich sein, ihn im wesentlichen um 90 oder 270 Grad zu wenden. Für einen Balken mit im wesentlichen dreieckigem Querschnitt erweist sich eine Ausführungsform der Erfindung mit drei Backen 4, 40 als sinnvoll, wobei der Winkel, um den der Balken gewendet wird im allgemeinen von 180 Grad abweichen wird und von der Geometrie des Querschnitts abhängt. Für andere Querschnitte kann eine andere Anzahl von Backen 4, 40 vorgesehen sein.

Fig. 8 zeigt eine weitere Ausführungsform der Erfindung, bei der zwei Wendeeinheiten 1 nebeneinander auf einem Ständer 80 montiert sind. Dabei kann für jede der Wendeeinheiten 1 der höhenverstellbare Rahmen 60 einzeln ausgebildet sein, es kann der höhenverstellbare Rahmen 60 aber auch so ausgebildet sein, daß beide Wendeeinheiten 1 auf ihm montiert sind, um eine einfachere Konstruktion zu erreichen. Durch diese Anordnung der Wendeeinheiten 1 kann der Durchsatz der Transportvorrichtung 2 erhöht werden. In einer alternativen Ausführungsform sind mehr als zwei Wendeeinheiten 1, die parallel arbeiten vorgesehen.

Durch die einfache Konstruktion der Wendeeinheit 1 ist es möglich bestehende Transportvorrichtungen 2 nachzurüsten. Um die Ausrichtung des Drehelements 5 zu ermöglichen, kann die Wendeeinheit 1 höhenverstellbar sein. Dies kann durch eine höhenverstellbare Halterung realisiert werden. Ein weiterer Vorteil an dem Verfahren ist, daß die Breite der Transportvorrichtung 2 und Länge des Stückgutes 3 für das Funktionieren der Wendeeinheit 1 von untergeordneter Bedeutung sind und sie für einen großen Bereich von Stückgütern 3 ohne Modifikation, wie z.B. den Einsatz eines stärkeren Motors 7, verwendbar ist.

## Patentansprüche

1. Vorrichtung zum Wenden von länglichem Stückgut (3), insbesondere von Holzbrettern, Balken und dergleichen, mit einer Wendeeinheit (1) und einer Transportvorrichtung (2), wobei das Stückgut (3) auf der Transportvorrichtung (2) im Quertransport, insbesondere auf einem Förderband oder auf einer Förderkette, an der Wendeeinheit (1) vorbeibewegbar und von der Wendeeinheit um die Längsachse des Stückgutes wendbar ist, **dadurch gekennzeichnet, daß** die Wendeeinheit (1) ein Drehelement (5) zum stimseitigen Erfassen des Stückgutes (3) umfaßt und das Drehelement (5) in Transportrichtung bewegbar ist, wobei die Wendeeinheit (1) dazu vorgesehen ist, das Stückgut (3) während des Wendevorgangs auf der Transportvorrichtung (2) abzuwälzen.

2. Vorrichtung zum Wenden nach Anspruch 1, **dadurch gekennzeichnet, daß** das Drehelement (5) zumindest teilweise seitlich der Transportvorrichtung (2) angeordnet ist.

3. Vorrichtung zum Wenden nach einem der Ansprüche 1 und 2, **dadurch gekennzeichnet, daß** das Drehelement (5) über eine Welle (6) mit einem Antriebsaggregat (7), insbesondere einem Motor, verbunden ist.

4. Vorrichtung zum Wenden nach einem der Ansprüche 1 bis 3, **dadurch gekennzeichnet, daß** das Drehelement (5) zum stirnseitigen Erfassen eine randoffene Ausnehmung aufweist.

5. Vorrichtung zum Wenden nach einem der Ansprüche 1 bis 4, **dadurch gekennzeichnet, daß** das Drehelement (5) zum stirnseitigen Erfassen eine Klemmvorrichtung (10) umfaßt.

6. Vorrichtung zum Wenden nach Anspruch 5, **dadurch gekennzeichnet, daß** die Klemmvorrichtung (10) zumindest einen beweglichen Backen (4, 40) aufweist.

7. Vorrichtung zum Wenden nach Anspruch 6, **dadurch gekennzeichnet, daß** der zumindest eine bewegliche Backen (4, 40) drehbar gelagert ist.

8. Vorrichtung zum Wenden nach Anspruch 7, **dadurch gekennzeichnet, daß** zur Betätigung der Klemmvorrichtung (10) eine Schiebemuffe (11), welche konzentrisch zur Welle (6) angeordnet ist, vorgesehen ist.

9. Vorrichtung zum Wenden nach einem der Ansprüche 5 bis 8, **dadurch gekennzeichnet, daß** ein Stellglied (50) für die Betätigung der Klemmvorrichtung (10) vorgesehen ist.

10. Vorrichtung zum Wenden nach einem der Ansprüche 1 bis 9, **dadurch gekennzeichnet, daß** ein Element (9) zur Erfassung der Lage des Stückgutes (3) auf der Transportvorrichtung (2) vorgesehen ist.

11. Vorrichtung zum Wenden nach einem der Ansprüche 1 bis 10, **dadurch gekennzeichnet, daß** die Wendeeinheit (1) höhenverstellbar angeordnet ist.

12. Vorrichtung zum Wenden nach einem der Ansprüche 1 bis 11, **dadurch gekennzeichnet, daß** das Drehelement (5) in der Höhe, vorzugsweise in einem Bereich, der zumindest die Hälfte der größten Abmessung des Querschnitts des Stückgutes (3) beträgt, frei bewegbar ist.

13. Vorrichtung zum Wenden nach einem der Ansprüche 1 bis 12, **dadurch gekennzeichnet, daß** das Drehelement (5) um eine Achse (D2) parallel zur Transportrichtung des Stückgutes (3) drehbar gelagert ist.

14. Vorrichtung zum Wenden nach einem der Ansprüche 1 bis 13, **dadurch gekennzeichnet, daß** das Drehelement (5) um eine Achse (D3) im wesentlichen normal sowohl zur Transportrichtung als auch zur Längsachse des Stückgutes (3) schwenkbar gelagert ist.

15. Vorrichtung zum Wenden nach einem der Ansprüche 13 und 14, **dadurch gekennzeichnet, daß** ein Stellelement (8) für die Bewegung des Drehelements (5) in Transportrichtung vorgesehen ist.

16. Vorrichtung zum Wenden nach einem der Ansprüche 1 bis 15, **dadurch gekennzeichnet, daß** das Drehelement (5) in Richtung seiner Drehachse (D1) beweglich ist.

17. Vorrichtung zum Wenden nach einem der Ansprüche 1 bis 16, **dadurch gekennzeichnet, daß** die Transportvorrichtung (2) im Bereich der Wendeeinheit (1) wenigstens eine zusätzliche Auflagevorrichtung (20), insbesondere eine zusätzliche Transportvorrichtung, aufweist.

18. Vorrichtung zum Wenden nach einem der Ansprüche 1 bis 17, **dadurch gekennzeichnet, daß** eine Einrichtung (70) zur Erfassung des Drehwinkels des Drehelements (5), insbesondere eine auf der Welle (6) fixierte Schaltnocke, vorgesehen ist.

19. Vorrichtung zum Wenden nach einem der Ansprüche 1 bis 18, **dadurch gekennzeichnet, daß** wenigstens zwei Wendeeinheiten (1) in Transportrichtung der Transportvorrichtung (2) nebeneinander angeordnet sind.

20. Verfahren zum Wenden von länglichem Stückgut (3), insbesondere von Holzbrettem, Balken und dergleichen, wobei das Stückgut (3) auf einer Transportvorrichtung (2) im Quertransport, insbesondere auf einem Förderband oder auf einer Förderkette, bewegt und in einem Wendebereich um seine Längsachse gewendet wird, wodurch die der Transportvorrichtung (2) abgewandte Seite dieser zugewendet wird, **dadurch gekennzeichnet, daß** mindestens eine Stirnseite (30) des länglichen Stückgutes (3) von einem Drehelement (5) erfaßt, durch Aufbringung eines Drehmomentes um seine Längsachse gewendet wird und das Drehelement (5) während des Wendens in Richtung der Transportvorrichtung (2) mitbewegt wird, wobei das Stückgut (3) auf der Transportvorrichtung abgewälzt wird, und nachfolgend das Stückgut (3) mittels der Transportvorrichtung (2) aus dem Wendebereich entfernt wird.

21. Verfahren nach Anspruch 20, **dadurch gekennzeichnet, daß** das Stückgut (3) vom Drehelement (5) geklemmt wird.

22. Verfahren nach einem der Ansprüche 20 und 21, **dadurch gekennzeichnet, daß** das Stückgut (3) beim Wenden auf der Transportvorrichtung (2) abgewälzt wird, wobei die Höhe des Drehelements (5) frei bewegbar ist, um die erforderliche Höhenänderung auszuführen.

23. Verfahren nach einem der Ansprüche 20 bis 22, **dadurch gekennzeichnet, daß** der Drehwinkel des Drehelements (5) erfaßt und zur Steuerung des Antriebsaggregats (7) verwendet wird.

24. Verfahren nach einem der Ansprüche 20 bis 23, **dadurch gekennzeichnet, daß** das Drehelement (5) während des Wendens mit ungleichförmiger Winkelgeschwindigkeit um seine Drehachse (D1) gedreht wird.

25. Verfahren nach einem der Ansprüche 20 bis 24, **dadurch gekennzeichnet, daß** vor dem Wenden die Lage des Stückgutes (3) bezüglich der Transportvorrichtung (2) bestimmt wird.

26. Verfahren nach einem der Ansprüche 20 bis 25, **dadurch gekennzeichnet, daß** das Drehelement (5) an die Lage des Stückgutes (3) angepaßt wird und dazu in Längsrichtung des Stückgutes (3) bewegt wird.

27. Verfahren nach einem der Ansprüche 20 bis 26, **dadurch gekennzeichnet, daß** die Oberflächenpressung des Stückgutes (3) durch wenigstens eine zusätzliche Auflagevorrichtung (20), insbesondere einer zusätzlichen Transportvorrichtung, im Wendebereich verringert wird.

28. Verfahren nach einem der Ansprüche 20 bis 27, **dadurch gekennzeichnet, daß** die Geschwindigkeit des Stückgutes (3) im Wendebereich durch eine zusätzliche Transportvorrichtung verändert wird.

29. Verfahren nach Anspruch 28, **dadurch gekennzeichnet, daß** die Geschwindigkeit des Stückgutes vor dem Wendebereich durch eine zusätzliche Transportvorrichtung beschleunigt wird und nachfolgend im Wendebereich eine weitere Transportvorrichtung mit Mitnehmern verwendet wird.

30. Verfahren nach einem der Ansprüche 20 bis 29, **dadurch gekennzeichnet, daß** mindestens zwei Stückgutteile (3) parallel gewendet werden.

## Claims

1. An apparatus for turning oblong piece goods (3), especially wood planks, beams and the like, with a turning unit (1) and a transport apparatus (2), with the piece good (3) being movable past the turning unit (1) on the transport apparatus (2) in transversal transport, especially on a conveyor belt or a conveyor chain, and can be turned by the turning unit about the longitudinal axis of the piece good, **characterized in that** the turning unit (1) comprises a turning element (5) grasping the piece good (3) at the face side and the turning element (5) is movable in the direction of transport, with the turning unit (1) being provided to roll the piece good (3) on the transport apparatus (2) during the turning process.

2. An apparatus for turning according to claim 1, **characterized in that** the turning element (5) is arranged at least partly lateral to the transport apparatus (2).

3. An apparatus for turning according to one of the claims 1 and 2, **characterized in that** the turning element (5) is connected via a shaft (6) with a drive unit (7), especially a motor.

4. An apparatus for turning according to one of the claims 1 to 3, **characterized in that** the turning element (5) comprises a recess with open edges.

5. An apparatus for turning according to one of the claims 1 to 4, **characterized in that** the turning element (5) comprises a clamping apparatus for grasping on the face side.

6. An apparatus for turning according to claim 5, **characterized in that** the clamping apparatus (10) comprises at least one movable beam (4, 40).

7. An apparatus for turning according to claim 6, **characterized in that** the at least one movable jaw (4, 40) is held in a rotatable manner.

8. An apparatus for turning according to claim 7, **characterized in that** a sliding sleeve (11) which is arranged concentrically relative to the shaft (6) is provided for actuating the clamping apparatus (10).

9. An apparatus for turning according to one of the claims 5 to 8, **characterized in that** an actuating member (50) is provided for actuating the clamping apparatus (10).

10. An apparatus for turning according to one of the claims 1 to 9, **characterized in that** an element (9) is provided for detecting the position of the piece good (3) on the transport apparatus (2).

11. An apparatus for turning according to one of the claims 1 to 10, **characterized in that** the turning unit (1) is arranged in a height-adjustable manner.

12. An apparatus for turning according to one of the claims 1 to 11, **characterized in that** the turning element (5) is freely movable in the height, preferably in a region which corresponds to at least half the largest dimension of the cross section of the piece good (3).

13. An apparatus for turning according to one of the claims 1 to 12, **characterized in that** the turning element (5) is rotatably held about an axis (D2) parallel to the transport direction of the piece good (3).

14. An apparatus for turning according to one of the claims 1 to 13, **characterized in that** the turning element (5) is pivotably held about an axis (D3) substantially normal both relative to the direction of transport as well as to the longitudinal axis of the piece good- (3).

15. An apparatus for turning according to one of the claims 13 and 14, **characterized in that** actuating element (8) is provided for the movement of the turning element (5) in the direction of transport.

16. An apparatus for turning according to one of the claims 1 to 15, **characterized in that** the turning element (5) is movable in the direction of its rotational axis (D1).

17. An apparatus for turning according to one of the claims 1 to 16, **characterized in that** the transport apparatus (2) comprises in the region of the turning unit (1) at least one additional bearing apparatus (20), especially an additional transport apparatus.

18. An apparatus for turning according to one of the claims 1 to 17, **characterized in that** a device (70) is provided for detecting the angle of rotation of the turning element (5), especially a switching cam fixed to the shaft (6).

19. An apparatus for turning according to one of the claims 1 to 18, **characterized in that** at least two turning units (1) are arranged adjacent to one another in the transport direction of the transport apparatus (2).

20. A method for turning oblong piece goods (3), especially wood planks, beams and the like, with the piece good (3) being moved on a transport apparatus (2) in transverse transport, especially on a conveyor belt or on a conveyor chain, and being turned in a turning region about its longitudinal axis, as a result of which the side averted from the transport apparatus faces the same, **characterized in that** at least one face side (30) of the oblong piece good (3) is grasped by a turning element (5), is turned about its longitudinal axis by application of a torque and the turning element (5) is co-moved during the turning in the direction of the transport apparatus (2), with the piece good (3) being rolled off on the transport apparatus, and thereafter the piece good (3) is removed from the turning region by means of the transport apparatus (2).

21. A method according to claim 20, **characterized in that** the piece good (3) is clamped by the turning element (5).

22. A method according to one of the claims 20 and 21, **characterized in that** the piece good (3) is rolled off on the transport apparatus (2) during the turning, with the height of the turning element (5) being freely movable in order to perform the required change in height.

23. A method according to one of the claims 20 to 22, **characterized in that** the angle of rotation of the turning element (5) is detected and is used for controlling the drive unit (7).

24. A method according to one of the claims 20 to 23, **characterized in that** the turning element (5) is rotated during the turning about its rotational axis (D1) with an uneven angular speed.

25. A method according to one of the claims 20 to 24, **characterized in that** the position of the piece good (3) relative to the transport apparatus (2) is determined prior to the turning.

26. A method according to one of the claims 20 to 25, **characterized in that** the turning element (5) is adjusted to the position of the piece good (3) and is moved for this purpose in the longitudinal direction of the piece good (3).

27. A method according to one of the claims 20 to 26, **characterized in that** the surface pressing of the piece good (3) is reduced in the turning region by at least one additional bearing apparatus (20, especially an additional transport apparatus.

28. A method according to one of the claims 20 to 27, **characterized in that** the speed of the piece good (3) is changed in the turning region by one additional transport apparatus.

29. A method according to claim 28, **characterized in that** the speed of the piece good before the turning region is accelerated by an additional transport apparatus and a further transport apparatus with drivers is used subsequently in the turning region.

30. A method according to one of the claims 20 to 29, **characterized in that** at least two piece good parts (3) are turned in parallel.

## Revendications

1. Dispositif de retournement de pièces (3) de forme allongée, notamment de planches de bois, de poutres et similaire, avec une unité de retournement (1) et un dispositif de transport (2), la pièce (3) étant déplaçable sur le dispositif de transport (2), notamment sur un transporteur à bande ou à chaîne, en travers du sens de la marche de manière à la faire passer devant l'unité de retournement (1) qui la fait pivoter autour de son axe longitudinal, **caractérisé en ce que** l'unité de retournement (1) comprend un élément tournant (5) destiné à saisir la pièce (3) par sa face d'extrémité et que l'élément tournant (5) est déplaçable dans le sens de marche, l'unité de retournement (1) étant prévue pour faire avancer la pièce (3) sur le dispositif de transport (2) pendant son retournement.

2. Dispositif de retournement selon la revendication 1, **caractérisé en ce que** l'élément tournant (5) est disposé du moins en partie sur le côté du dispositif de transport (2).

3. Dispositif de retournement selon l'une quelconque des revendications 1 et 2, **caractérisé en ce que** l'élément tournant (5) est relié par l'intermédiaire d'un arbre (6) à un groupe d'entraînement (7), notamment à un moteur.

4. Dispositif de retournement selon l'une quelconque des revendications 1 à 3, **caractérisé en ce que** l'élément tournant (5) comporte un évidement ouvert sur son bord pour saisir la pièce par sa face d'extrémité.

5. Dispositif de retournement selon l'une quelconque des revendications 1 à 4, **caractérisé en ce que** l'élément tournant (5) comprend un dispositif de serrage (10) pour saisir la pièce par sa face d'extrémité.

6. Dispositif de retournement selon la revendication 5, **caractérisé en ce que** le dispositif de serrage (10) comporte au moins un mors (4, 40) mobile.

7. Dispositif de retournement selon la revendication 6, **caractérisé en ce que** l'au moins un mors (4, 40) mobile est monté mobile en rotation.

8. Dispositif de retournement selon la revendication 7, **caractérisé en ce que**, pour actionner le dispositif de serrage (10), il est prévu un fourreau baladeur (11) disposé de manière concentrique autour de l'arbre (6).

9. Dispositif de retournement selon l'une quelconque des revendications 5 à 8, **caractérisé en ce qu'**un actionneur (50) est prévu pour actionner le dispositif de serrage (10).

10. Dispositif de retournement selon l'une quelconque des revendications 1 à 9, **caractérisé en ce qu'**un élément (9) destiné à détecter la position de la pièce (3) sur le dispositif de transport (2) est prévu.

11. Dispositif de retournement selon l'une quelconque des revendications 1 à 10, **caractérisé en ce que** l'unité de retournement (1) est disposée de manière à être réglable en hauteur.

12. Dispositif de retournement selon l'une quelconque des revendications 1 à 11, **caractérisé en ce que** l'élément tournant (5) est librement mobile en hauteur, de préférence dans une région correspondant au moins à la moitié de la plus grande section de la pièce (3).

13. Dispositif de retournement selon l'une quelconque des revendications 1 à 12, **caractérisé en ce que** l'élément tournant (5) est monté mobile en rotation autour d'un axe (D2) parallèle au sens de la marche de la pièce (3).

14. Dispositif de retournement selon l'une quelconque des revendications 1 à 13, **caractérisé en ce que** l'élément tournant (5) est monté pivotant autour d'un axe (D3) sensiblement perpendiculairement tant au sens de la marche qu'à l'axe longitudinal de la pièce (3).

15. Dispositif de retournement selon l'une quelconque des revendications 13 et 14, **caractérisé en ce qu'**un élément de réglage (8) pour déplacer l'élément tournant (5) dans le sens de la marche est prévu.

16. Dispositif de retournement selon l'une quelconque des revendications 1 à 15, **caractérisé en ce que** l'élément tournant (5) est mobile suivant la direction de son axe de rotation (D1).

17. Dispositif de retournement selon l'une quelconque des revendications 1 à 16, **caractérisé en ce que** le dispositif de transport (2) comporte, à la hauteur de l'unité de retournement (1), au moins un dispositif d'appui (20) supplémentaire, notamment un dispositif de transport supplémentaire.

18. Dispositif de retournement selon l'une quelconque des revendications 1 à 17, **caractérisé en ce qu'**il est prévu un dispositif (70) destiné à détecter l'angle de rotation de l'élément tournant (5), notamment une came de contact fixée sur l'arbre (6).

19. Dispositif de retournement selon l'une quelconque des revendications 1 à 18, **caractérisé en ce que** deux unités de retournement (1) sont disposées côte à côte dans le sens de marche du dispositif de transport (2).

20. Procédé pour retourner des pièces (3) de forme allongée, notamment des planches de bois, des poutres et similaire, la pièce (3) étant déplacée sur un dispositif de transport (2), notamment sur un transporteur à bande ou à chaîne, en travers du sens de marche du dispositif de transport et étant pivotée autour de son axe longitudinal dans une zone de retournement de sorte que la face détournée du dispositif de transport (2) est maintenant tournée vers celui-ci, **caractérisé en ce qu'**au moins une face d'extrémité (30) de la pièce (3) de forme allongée est saisie par un élément tournant (5), est pivotée autour de son axe longitudinal sous l'effet d'un couple de rotation auquel elle est soumise et l'élément tournant (5) étant emmené dans le déplacement suivant la direction du dispositif de transport (2) pendant le retournement, la pièce (3) étant avancée sur le dispositif de transport et la pièce (3) étant ensuite éloignée de la zone de retournement au moyen du dispositif de transport (2).

21. Procédé selon la revendication 20, **caractérisé en ce que** la pièce (3) est serrée par l'élément tournant (5).

22. Procédé selon l'une quelconque des revendications 20 et 21, **caractérisé en ce que** la pièce (3) est avancée pendant son retournement sur le dispositif de transport (2), la hauteur de l'élément tournant (5) étant librement mobile afin de pouvoir effectuer le changement en hauteur nécessaire.

23. Procédé selon l'une quelconque des revendications 20 à 22, **caractérisé en ce que** l'angle de rotation de l'élément tournant (5) est détecté et utilisé pour commander le groupe d'entraînement (7).

24. Procédé selon l'une quelconque des revendications 20 à 23, **caractérisé en ce que**, pendant le retournement, l'élément tournant (5) est tourné autour de son axe de rotation (D1) à une vitesse angulaire irrégulière.

25. Procédé selon l'une quelconque des revendications 20 à 24, **caractérisé en ce que** l'on détermine la position de la pièce (3) par rapport au dispositif de transport (2) avant de la retourner.

26. Procédé selon l'une quelconque des revendications 20 à 25, **caractérisé en ce que** l'élément tournant (5) est adapté à la position de la pièce (3) et est déplacé à cet effet dans le sens de la longueur de la pièce (3).

27. Procédé selon l'une quelconque des revendications 20 à 26, **caractérisé en ce que** la pression en surface de la pièce (3) dans la zone de retournement est réduite par au moins un dispositif d'appui (20) supplémentaire, notamment par un dispositif de transport supplémentaire.

28. Procédé selon l'une quelconque des revendications 20 à 27, **caractérisé en ce que** la vitesse de la pièce (3) dans la zone de retournement est modifiée par un dispositif de transport supplémentaire.

29. Procédé selon la revendication 28, **caractérisé en ce que** la vitesse de la pièce est augmentée par un dispositif de transport supplémentaire en amont de la zone de retournement et qu'un autre dispositif de transport avec des entraîneurs est utilisé ensuite dans la zone de retournement.

30. Procédé selon l'une quelconque des revendications 20 à 29, **caractérisé en ce qu'**au moins deux pièces (3) sont pivotées en parallèle.
